# EUROPEAN PATENT APPLICATION

(11) **EP 2 391 054 A1**
(43) Date of publication of application: **30.11.2011**
(21) Application number: 11167148.3
(22) Date of filing: 23.05.2011
(51) Int. Cl.: H04L 9/32, H04L 29/06

(54) **Method for performing certified asynchronous electronic transmission of data and information via messaging using mobile communications protocols and related communication network**

(30) Priority: 24.05.2010 IT MI20100935
(71) Applicant: Mobile Solution S.r.l., 20122 Milano (IT)
(72) Inventor: Marrone, Davide, I-22100 Como (IT); Orsi Carbone, Luigi Enrico, I-15057 Tortona (AL) (IT); Quintarelli, Giuseppe Stefano, I-20090 Cusago (MI) (IT)
(74) Representative: De Bortoli, Eros

(57) **Abstract**

The present invention relates to a method for performing certified asynchronous electronic transmission via messaging, using mobile communication protocols between at least a first sending computer device, at least a second intermediary computer device, in communication with said first computer device, and at least a third receiving mobile computer device, in communication with said second computer device.
The method comprises the following steps:
- a first step, in which said first computer device sends first information to said second computer device, said first information comprising first data to be forwarded to said third mobile computer device, second identification data of said third mobile computer device and a digital signature, third encryption data of at least said first data, said third encryption data comprising at least an encryption sequence and/or data generated through said encryption sequence;
- a second step, in which said second computer device receives said first information, performs verification of said first information, based on the digital signature sent by said first computer device, stores said first information on at least a permanent medium (120), and forwards to said third mobile computer device second information comprising at least said first data and/or information adapted to allow access to said first data, after having stored said first information;
- a third step, in which said third mobile computer device receives said second information and makes said second information accessible to the user, after having entered said encryption sequence and/or data generated through said encryption sequence, at least said encryption sequence being forwarded by said first computer device directly to said third mobile computer device;
- a fourth step, in which said second computer device sends to said first computer device third information indicating the delivery status of said second information.

In a further aspect, the present invention relates to a communication network for performing certified asynchronous electronic transmission via messaging, using mobile communication protocols.

## Description

The present invention relates to the field of information systems for the electronic transmission of data and information through messaging services, such as, for example, SMS, MMS or instant messaging services or the like.

In particular, the present invention relates to a method for performing certified asynchronous electronic transmission of data and information via messaging, using mobile communication protocols.

In a further aspect thereof, the present invention relates to a communication network for certified asynchronous transmission of data and information via messaging, using mobile communication protocols.

Data and information transmission between public and or private bodies and/or parties related thereto has particular relevance given the everyday nature of contacts and the relevant mass of data and information exchanged.

Ideally, correct data and information transmission between a sender (for example a public or private body) and a recipient (for example another public or private body or a citizen) should have the following characteristics:
- identifiability: it must be possible to unequivocally identify the sender and the recipient;
- non-repudiability: it must be impossible for the sender/recipient to repudiate the data and information transmitted/received;
- integrity: the data and information must be transmitted without alterations;
- confidentiality: transmission of data and information must be truly confidential, i.e. legible only by the recipient.

Further important requirements for the transmission of data and information are the possibility of receiving a delivery receipt, the possibility of receiving a read receipt, relatively low delivery times and costs.

Many types of means of communication can be used to transmit data and information to third parties.

It is possible to distinguish them in relation to the type of medium with which communications are transmitted: for example paper media, electronic media or mixed media (paper/electronic).

Means of communication on paper media, conventionally letters, are undoubtedly still the most widely used, above all as they are easy to use and accessible to the entire population.

In particular, the registered letter with return receipt is the most widely used tool by public or private bodies for certified communication with third parties.

Besides offering the features of identifiability and non-repudiability described above, this communication tool makes it possible to store data and information in a permanent storage medium, for example a paper archive.

However, it does not guarantee the integrity and confidentiality of the communication, as letters can be easily read, intercepted or altered by anyone who has access to the mailing/delivery operations or to these archives.

Over the years, hybrid forms of communication have been introduced, partly electronic and partly paper, such as telegrams, facsimile transmission and, ultimately, letters sent/received by electronic medium.

However, these means of communication do not entirely guarantee that the transmission of data and information takes place with the above-mentioned specific requirements.

A further evolution of the aforesaid means of communication concerned the development of communication tools capable of transmitting data and information electronically, i.e. without the use of paper media.

These include telephone messages (instant or not) and electronic mail.

These communication tools use fixed or mobile communication networks to transmit data and information and, evidently, allow the bodies that use them to obtain a significant saving of time and costs related to the management of the operating activities and services.

In Italy, certified electronic mail, known as PEC (Posta Elettronica Certificata), has recently been introduced as means for electronic transmission of data and information.

One of the objects of PEC is in fact substitution of the conventional registered letter with return receipt, thereby offering guarantees in terms of actual delivery and integrity of the content transmitted.

Added to this there is also the possibility to certify the contents of the message sent through digital signature.

The solution described has the disadvantage of not being widely distributed and available and of requiring a certified electronic mailbox.

Moreover, the use of electronic mail is closely linked to the widespread availability of an Internet connection (which today only reaches 50% of the Italian population for fixed line network connections).

A further disadvantage derives from the fact that certified electronic mail offers the guarantee that the message has been delivered but not that it has actually been read by the recipient. The aim of the present invention is to provide a method and a communication network for the electronic transmission of data and information via messaging to a mobile computer device that allows to overcoming the problems described above to be solved.

Within the scope of the aforesaid aim, an object of the present invention is to provide a method and a communication network that are capable of offering characteristics of identifiability, non-repudiability, integrity and confidentiality in the transmission of data and information.

Another object of the present invention is to provide a method and a communication network that make it possible to provide a delivery and read receipt and to permanently store the data and information transmitted.

A further object of the present invention is to provide a method and a communication network that guarantee short delivery times, with regard to the data and information transmitted, and relatively low costs for the practical implementation thereof.

The aforesaid objects are achieved by a method according to the claim 1 proposed hereunder.

The method, according to the present invention, provides for the certified asynchronous transmission of data and information via messaging, using mobile communication protocols, between at least a first sending computer device, at least a second intermediary computer device, in communication with said first computer device, and at least a third receiving mobile computer device, in communication with said second computer device.

The method, according to the invention, comprises the following steps:
- a first step wherein said first computer device sends first information to said second computer device, said first information comprising first data to be forwarded to said third mobile computer device, second identification data of said third mobile computer device and a digital signature, third encryption data of at least said first data, said third data comprising at least an encryption sequence and/or data generated through said encryption sequence;
- a second step wherein said second computer device receives said first information, performs verification of said first information, based on the digital signature sent by said first computer device, stores said first information on at least a permanent medium, and forwards to said third mobile computer device second information comprising at least said first data and/or information adapted to allow access to said first data, after having stored said first information;
- a third step wherein said third mobile computer device receives said second information and makes it accessible to the user, after having entered said encryption sequence and/or data generated through said encryption sequence, at least said encryption sequence being forwarded by said first computer device directly to said third mobile computer device;
- a fourth step wherein said second computer device sends to said first computer device third information indicating the delivery status of said second information.

The aforesaid objects are also achieved by a communication network, according to the claim 13, proposed hereunder.

The communication network, according to the present invention, provides for the certified asynchronous transmission of data and information via messaging, using mobile communication protocols.

The communication network, according to the present invention, comprises at least a first sending computer device, at least a second intermediary computer device, in communication with said first computer device, and at least a third receiving mobile computer device, in communication with said second computer device.

In the communication network, according to the present invention:
- said first computer device sends first information to said second computer device, said first information comprising first data to be forwarded to said third mobile computer device, second identification data of said third mobile computer device and a digital signature, third encryption data of at least said first data, said third data comprising at least an encryption sequence and/or data generated through said encryption sequence;
- said second computer device receives said first information, performs verification of said first information, based on the digital signature sent by said first computer device, stores said first information on at least a permanent medium, and forwards to said third mobile computer device second information comprising at least said first data and/or information adapted to allow access to said first data, after having stored said first information;
- said third mobile computer device receives said second information and makes it accessible to the user, after having entered said encryption sequence and/or data generated through said encryption sequence, at least said encryption sequence being forwarded by said first computer device directly to said third mobile computer device;
- said second computer device sends to said first computer device third information indicating the delivery status of said second information.

The method and the communication network, according to the present invention, allow a transmission of data and information that satisfies the requirements of identifiability, non-repudiability, integrity and confidentiality set forth above.

The term "messaging" in this context relates to services such as Short Message Service (SMS), Multimedia Messaging Service (MMS), Instant Messaging or the like.

The term "sender" in this context is intended as the user of the first computer device, as a further device that uses said first computer device or as said first computer device.

The term "recipient" is intended as the user of the third mobile computer device, as a further device that uses said third mobile computer device or as said third mobile computer device.

In relation to the characteristic of identifiability, the solution proposed by the present invention allows the transmission of data and information to the third mobile computer device, with which the legal identity of a recipient is associated (for example the telephone number of the third mobile computer device is linked to the identification document of the owner). It is thus always possible to identify the recipient.

A second level of identifiability can be guaranteed through the entering of an identification code by the recipient to gain access to the data and information transmitted by the sender, this code having been exchanged and shared in advance between sender and recipient, without being shared with the intermediary, as the second computer device.

This level of security prevents reading of the communication in the event of theft of the mobile terminal or in the case of improper or unauthorized access to this terminal. Finally, the recipient is able to identify the sender of the communication directly and with certainty, as it will be visualized only if it was actually generated through the identification code that sender and recipient exchanged in advance.

In relation to the characteristic of non-repudiability, the sender receives from the intermediary the delivery receipt of the message sent to the recipient. In this way the recipient cannot deny having received the communication.

Likewise, the sender cannot repudiate the communication as its digital signature is affixed, the message and its digital signature being received, verified and stored by the intermediary. This allows authentication of the message transmitted and makes it impossible for the sender to repudiate the communication sent.

Moreover, by storing the data and information received on a permanent archive, as soon as they have been sent by the sender, the intermediary is able to verify the validity of the digital signature of the sender at any time. In particular, to verify the validity of the digital signature, the intermediary can use the digital signature sent to it by the sender with the message.

The term "intermediary" is intended as the user of the second computer device, as a further device that uses said second computer device or as said second computer device.

The term "archive or permanent medium" refers here to a document system that allows permanent and non-modifiable storing of data and information through the use of substitute storage tools, for example digital time stamping, digital signature and unalterable media (for example optical or magnetic disks). Naturally, a permanent archive allows the data and information stored to be displayed at any time.

The integrity of a message can be advantageously checked by the receiver, which may in turn process a MAC code using the PIN, the first data and the digital signature and check the resulting code with the second information that is actually received by the intermediary.

In relation to the characteristic of integrity, digitally signing the communication the sender guarantees the integrity of the content thereof in relation to the recipient.

Moreover, storing on a permanent medium allows the intermediary to retrieve the data and information received at any time on request by the sender or by the receiver.

In relation to the characteristic of confidentiality, the sender is able to encrypt the communication sent. This allows the creation of a confidential transmission channel between sender and recipient basing on the identification code exchanged in advance between the sender and the recipient but not with the intermediary.

If, on the other hand, it is not necessary to guarantee an end-to-end confidential channel between sender and recipient, the present invention would in any case guarantee a high level of confidentiality and integrity through transmission of data and information on security protocols.

The recipient therefore has the assurance that the transmission of data and information has a high level of confidentiality.

The method and the communication network according to the present invention make it possible to send communications with the possibility of receiving a delivery receipt and read receipt.

In relation to the possibility of receiving a delivery receipt, regardless of the method of transmission, it is always possible for the sender to be certain of receiving notification of delivery to the recipient.

The sender will also be able to learn, besides the time and date of receipt of the communication, also if it was not received due to problems related to the recipient (for example, recipient's telephone number out of service) or to problems related to the physical/logical structure of the communication network.

In relation to the possibility of receiving a delivery receipt, the sender can also receive a read receipt of the data and information transmitted, i.e. date and time at which this communication was visualized on the third mobile computer device.

The method and the communication network according to the present invention guarantee relatively low delivery times and costs for the data and information transmitted.

The solution proposed by the present invention has the advantage of allowing immediate communication between user and recipient, which can take place without the physical and/or logical presence of the recipient, as instead occurs when sending registered letters.

The sender eliminates costs related to printing, inserting and mailing of the paper medium of the communication.

In a particular embodiment thereof, the present invention allows to combining the characteristics of security deriving from the use of the digital signature and of an encryption sequence in the transmission of data.

The term "digital signature" in this context is intended as an authentication system based on public key cryptography or PKI. It represents an authentication system for digital documents capable of guaranteeing non-repudiation thereof by the party that generated them. In many countries the digital signature can be affixed to electronic documents in the same way as a manual signature on conventional documents.

The algorithms normally used to generate public keys that can be utilized to create digital signatures are RSA or DSA algorithms, both algorithms for asymmetric cryptography.

The term "asymmetric cryptography" in this context is intended as an encryption system with a pair of keys wherein one of the two keys, defined "public key" is made public inside the above-mentioned digital certificate and the other key, defined "private key", unequivocally correlated to the first key, remains secret and associated with the owner. The specific nature of encryption also resides in the fact that a pair of keys can be assigned to only one user.

The digital certificate certifies association between a public key and the identity of a party (for example computer user) through affixing of the digital signature to a digital document.

The digital certificate is issued through a certification procedure that follows international standards, in conformity with European and national legislation.

The trusted third party (or TTP) entrusted with issue of said digital certificate takes the name certification authority and holds the digital certificate with which all certificates issued are signed.

The solution proposed by the present invention differs from electronic mail and from a certified electronic mail (PEC) as the recipient does not require to have an electronic mail and certified electronic mailbox.

In fact, the communication can be sent to a personal mobile communication device of the recipient without requiring the necessary provision of further technical solutions.

Finally, the present invention has the advantage of not having to rely on the widespread availability of a fixed line Internet connection, given that communication is sent to the recipient's mobile communication device (such as, purely by way of example, a mobile telephone, a smartphone, a tablet computer).

Further characteristics and advantages of the present invention will be more apparent from the description of preferred embodiments, shown by way of non-limiting example in the accompanying figures, wherein:

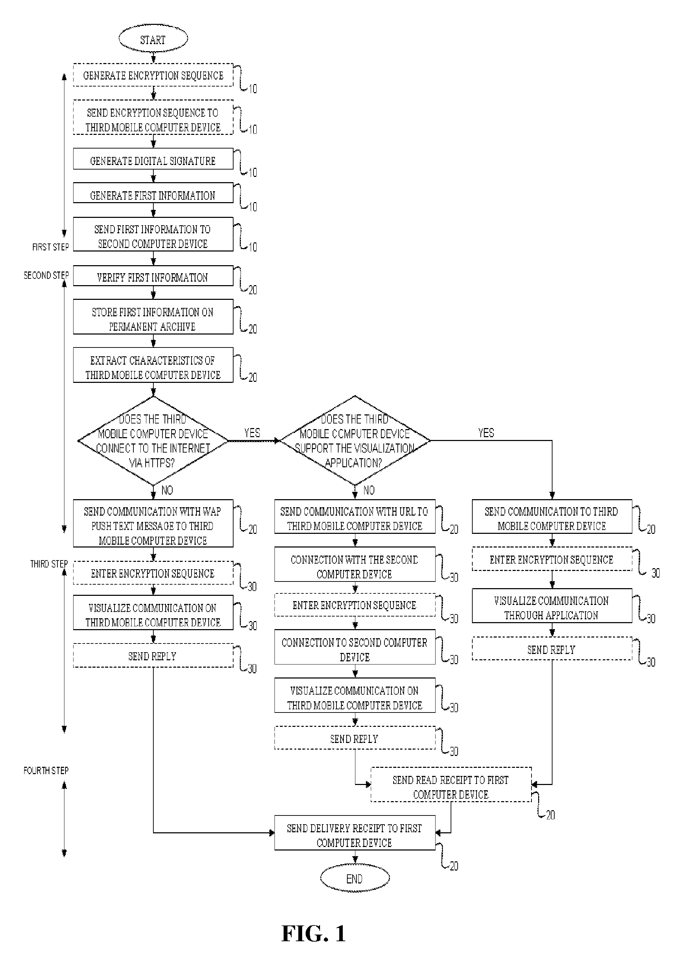

- Fig. 1 is a flow chart of the method according to the present invention;
- Fig. 2 is a schematic block diagram of a first embodiment of a communication network according to the present invention;
- Fig. 3 is a schematic block diagram of a second embodiment of a communication network according to the present invention;
- Fig. 4A is a first schematic block diagram of a third embodiment of a communication network according to the present invention;
- Fig. 4B is a second schematic block diagram of a third embodiment of a communication network according to the present invention;
- Fig. 4C is a third schematic block diagram of a third embodiment of a communication network according to the present invention;
- Fig 5 is a schematic block diagram of a fourth embodiment of a communication network according to the present invention.

With reference to the aforesaid figures, the invention relates to a method for performing certified asynchronous electronic transmission of data and information via messaging using mobile communication protocols.

The method, according to the invention, uses only mobile communication protocols on a mobile network between different computer devices.

The method, according to the invention, is advantageously implemented by a communication network that comprises at least a first sending computer device 10, at least a second intermediary computer device 20, in communication with the first computer device 10, and at least a third receiving mobile computer device 30, in communication with said second computer device 20.

The computer devices 10 and 20 may not be mobile devices.

The first device 10 preferably comprises an internal database 13 containing the correspondences between telephone numbers and recipients of the communications.

The device 10 is advantageously interfaced with a certification authority 11 through a certification request channel 111 and a certification issue channel 211.

Typically, the device 10 connects to the certification authority 11 only once, during the request for the digital certificate.

The first device 10 is preferably also connected to a MAC generator 12 through a MAC request channel 212 and a MAC generation channel 112.

The first device 10 is adapted to send to the second computer device 20 first information comprising first data to be forwarded to the third mobile computer device 30, second identification data of the third mobile device 30, a digital signature and third encryption data of at least said first data, which in turn comprise at least an encryption sequence and/or data generated through said encryption sequence.

The first device 10 is connected to the second device 20 through a first communication forwarding channel 121 and a delivery receipt channel 221.

The channels 121 and 221 are advantageously secure channels produced through the use of a standard protocol that makes use of cryptography for data communication, for example the HTTPS protocol.

For these channels, it is also possible to use standard symmetric protocols (for example AES protocols) or asymmetric cryptography protocols that use encryption/decryption keys of analogous type to those used to generate the digital signature.

Finally, the first device 10 is connected to the third mobile device 30 through a PIN communication connection 131 to guarantee the decryption of the third encryption data.

The second device 20 is operatively associated with permanent storage media or archives 120 through a storing channel 121 and a communication retrieving channel 122.

The archives 120 are preferably produced by means of devices with optical technology (CD-ROM) but they could be constituted by devices with magnetic or another type of technology, with a non-volatile and unalterable memory.

The second device 20 is advantageously interfaced with the certification authority 11 by means of a certification request channel 214 and a certification receipt channel 215. According to the invention, the second device 20 is adapted to receive first information sent by the first device 10, perform a verification of said first information and store it in the permanent archives 120, as soon as the message arrives.

In order to perform the verification of said first information, the second device 20 uses the digital signature sent by the first computer device attached with the message.

The second device 20 is adapted to forward to the third mobile device 30 second information comprising at least the first data, transmitted by the first device 10, and/or information adapted to allow access to said first data.

The second device 20 forwards said second information after it has stored the first information in the permanent archives 120.

The third mobile device 30 is adapted to receive the second information transmitted by the device 20 and make it accessible to the user, after having entered the mentioned encryption sequence and/or data generated through said encryption sequence. Said encryption sequence and/or the data generated through said encryption sequence are shared only between the first device 10 and the third mobile device 30.

The second device 20, in fact, is not able to access to these pieces of information, even if said encryption sequence and/or data generated through said encryption sequence are comprised in the third data that are sent by the first device 10 to the second device 20.

Preferably, the second device 20 then sends to the first device 10 third information indicating the delivery status of the aforesaid second information.

The second device 20 is advantageously connected to the third mobile device 30 through a second communication forwarding channel 123.

The channel 123 is advantageously realised using a standard protocol for mobile communication, such as the WAP PUSH protocol.

The term "WAP PUSH protocol" is intended as a protocol capable of sending additional information to the simple text, in a communication based on WAP protocol for mobile networks.

A WAP PUSH transmission can use the WTLS protocol, which is a secure communication protocol of the standard WAP protocol. This WTLS protocol provides a security mechanism based on a public key similar to the TLS protocol.

In a first embodiment of the present invention, the first and the second device 10, 20 are each constituted by a computer device acting as server, while the third mobile device 30 is a mobile communication device, specifically a mobile (cellular) telephone functioning on GSM network and enabled to receive SMS text messages with WAP PUSH protocol.

The MAC generator 12 is, in this embodiment, a physical (hardware) device operatively associated with or integrated in the first device 10 and having the characteristic of not being connected to the remaining part of the communication network.

Alternatively, the MAC generator 12 may be implemented through software installed in the first device 10.

The MAC generator 12 advantageously generates third encryption data, which comprise the authentication code of the first information to be sent. This code is generally defined "MAC" and consists of a block of data used to authenticate the digital message.

The first device 10 sends the encryption sequence, called "PIN", to the MAC generator 12 to be used as encryption key for generation of the MAC related to the message to be sent.

The third encryption data thus advantageously comprise the PIN and/or the MAC.

At least the PIN is directly communicated in a secure manner, through the channel 131 to the third mobile device 30. Preferably, the PIN is sent to the third mobile device 30 only. As an alternative, the PIN may be sent also to the second device.

Preferably, the PIN is not shared between the computer devices 10 and 20. Thus, even if third encryption data are sent to the second device 20, the second device 20 is preferably not able to access to the PIN and, consequently, read the text of the message to exchange in any case. The PIN is also necessary for subsequent communications having the function of primary key for encryption/decryption of the transmission.

The first device 10 generates also a pair of keys through an asymmetric algorithm (for example an RSA or DSA algorithm). These are sent to the certification authority 11 through the certification request channel 111.

The certification authority 11 produces a digital certificate and sends it through the certification issue channel 211 to the first device 10. This certificate allows association of the identity of the first device 10 with its public key.

The first device 10 selects the addressee of the communication. The data of the addressee or recipient are extracted from the internal database 13 which comprises the second identification data of the third mobile device 30 (for example the telephone number to which the transmission is to be sent).

The first device 10 proceeds with generation of the first data to be forwarded to the third mobile device 30, for example comprising precise digital information.

Through the MAC request channel 212, the first device 10 sends preferably to the MAC generator 12 the data to be encrypted and the encryption sequence, previously generated.

The resulting coded first data are sent to the first device 10 through the MAC generation channel 112.

The first data constitute the information to which the first device 10 will then affix its digital signature.

The aforesaid first information transmitted by the device 10 to the device 20 comprise the identification data of the third mobile device 30, the first data, the digital signature and possibly the encryption sequence, i.e. the PIN, and/or the data generated through this encryption sequence, i.e. the MAC.

From the above, it can be noted how through the MAC generator 12, the first device 10 is able to perform an encryption of the first information to be sent to the device 20, through at least a symmetric algorithm that uses as key an encryption sequence and/or data generated through said encryption sequence.

As mentioned above, the device 10 sends, through the first communication forwarding channel 121, the first information to the second device 20.

In this step, the digital signature affixed by the first device 10 guarantees the integrity and non-repudiability of the message. Moreover, the communication forwarding channel 121 guarantees the required confidentiality.

The second device 20 verifies the first information received through the digital signature contained therein.

Verification is aimed at ascertaining that the first information effectively comes from the first device 10 and is performed out by verifying the digital signature received using the digital certificate with which it is associated.

Verification of the digital certificate is performed by requesting the certificate of the certification authority 11 through the certification request channel 214. In this case, the certificate is sent by the authority 11 through the certification channel 215.

If the digital signature is valid and coherent, the second device 20 immediately stores the first information, received by the device 10, on permanent archives 120 through a storing channel 121.

Storing allows the stored information to be displayed, if necessary, through the communication retrieving channel 122, to allow verification, at any time, of the content of the first information received by the device 20. This guarantees non-repudiability of the information transmitted both for the sender and for the recipient.

After storing has been implemented, the second device 20 forwards second information to the third mobile device 30, through the communication forwarding channel 123.

The second information comprises at least the said first data and/or information adapted to allow access to said first data sent by the first device 10 to the second device 20.

Preferably, the second information comprises the digital signature sent by the first device 10 to the second device 20.

Advantageously, the second device 20 uses the second data, transmitted by the device 10, to query the mobile communication network, on which the third mobile device 30 is registered, and/or to extract first specifications of said third mobile device 30.

These specifications comprise at least an identification code of the third mobile device 30 adapted to allow identification of its type and/or identifiability of the mobile communication protocols supported thereby.

In other words, forwarding of the second information is advantageously preceded by extraction of the characteristics of the third mobile device 30, which are obtained from the second device 20, in relation to the telephone number associated with the third mobile device 30, so as to identify the forwarding protocol to use in the transmission.

These characteristics are identified by the second device 20 through data provided by the GSM network on which the telephone number, related to the third mobile device 30, is registered. The second device 20 detects the identification code of the third mobile device 30 (code called IMEI), thereby allowing identification of the aforesaid specifications.

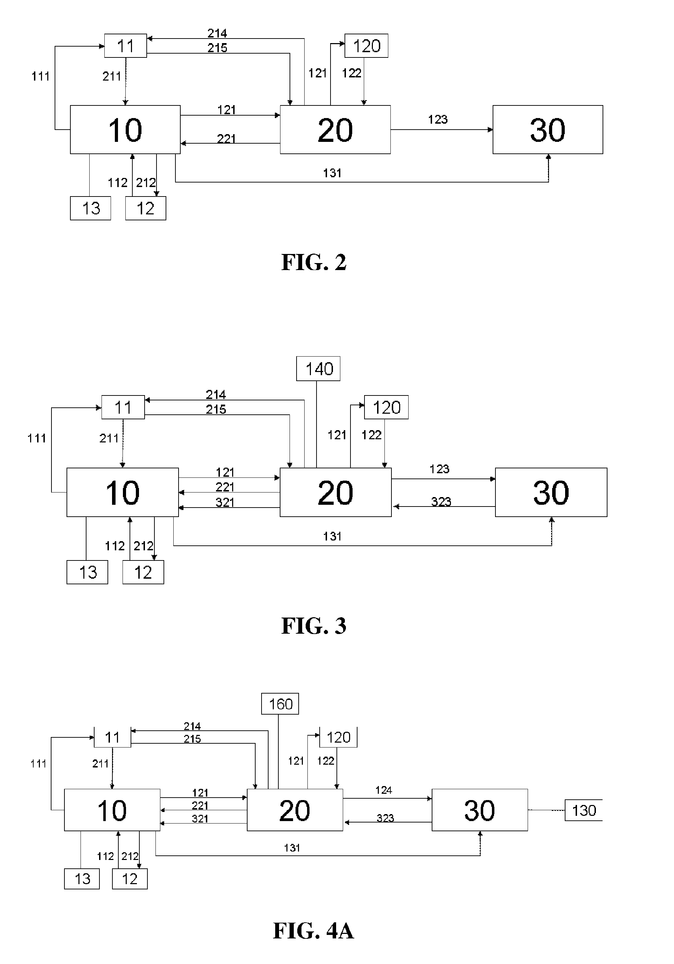

According to the first embodiment described above, with reference to Fig. 2, the third mobile device 30 is capable of supporting WAP PUSH protocol.

The second device 20 therefore proceeds to send the second information, using WAP PUSH protocol, to the telephone number associated with the third mobile device 30.

The WAP PUSH system advantageously allows second information to be sent by means of a verification of integrity based on entering the encryption sequence or PIN, shared only between said first device 10 and said third mobile device 30. The second information can therefore be visualized by the third mobile device 30, after entering the correct encryption sequence.

With this operation, the confidentiality and integrity of the transmission are supplied by the WTLS protocol used to forward said second information to the third mobile device 30.

The third mobile device 30 is capable of correctly receiving the second data of the transmission, if the network has no physical and/or logical problems and if the telephone number associated with the third mobile device 30 is correct and in service.

In any case, the second device 20 sends third information to the first device 10 through the delivery receipt channel 221.

The third information is indicative of the delivery status of the second information. If the third mobile device 30 is capable of correctly receiving the transmission, the third information will indicate that forwarding has been successful, comprising details related to the date and time of delivery.

If it was not possible to communicate with the third mobile device 30, due to logical/physical communication problems of the network or due to the device 30 being permanently out of service, the information on delivery status will indicate that transmission was unsuccessful, comprising details related to the causes of non-delivery.

Nonetheless, the information on delivery status will be stored by the second device 20 together with the other information concerning that message,

When the third mobile device 30 receives the second information forwarded previously by the second device 20, receipt of this second information will be visualized on the display of the third mobile device 30, this being a mobile telephone.

As mentioned above, to visualize the second information received, it may be necessary to enter the encryption sequence or PIN previously communicated by the first device 10 to the third mobile device 30, through the channel 131.

In the event of this being entered erroneously, or not being entered, as the second information is carried on protected WAP PUSH protocol, it will not be visualized.

Entry of the encryption sequence therefore guarantees a further level of integrity and confidentiality of the message and a further level of identifiability of the client.

It is evident how the present invention allows the transmission of data and information capable of substituting both a registered letter with return receipt and certified electronic mail (PEC).

In a second embodiment of the invention, with reference to Fig. 3, the third mobile device 30 is enabled to use HTTPS protocol for the transmission of data and information.

In this configuration, it is possible to guarantee a higher level of security and the possibility of the second device 20 sending a read receipt to the first device 10.

In this second embodiment, the communication network comprises two further transmission channels.

A first channel 321 is used for the read receipt of the second information by the third mobile device 30. The channel 321 is established between the second device 20 and the first device 10.

A second channel 323, established between the third mobile device 30 and the second device 20, is related to visualization of the communication on the third mobile device 30.

The channels 321 and 323 are secure channels produced through the use of an encrypted transmission protocol, for example the HTTPS protocol.

The second device 20 also comprises a web server 140 that uses the HTTPS protocol.

As shall be seen, the server 140 constitutes a visualization interface between the second device 20 and the third mobile device 30.

In this second embodiment, the first and second step of data and information transmission are substantially identical to those described for the first embodiment of the present invention.

However, in this case, the second information forwarded by the second device 20 does not comprise the first data transmitted by the device 10 to the device 20 but information adapted to allow access to said first data, in this specific case a hypertext link (URL) that allows access to the text of the message transmitted by the device 10 to the device 20. This URL link points to a secure web page present in the web server 140.

The information on delivery status of said second information will be stored by the second device 20. The information on delivery status may not comprise the hypertext link but it may comprise information that allow the user to obtain said hypertext link through different ways. The first data transmitted by the device 10 to the device 20, for example the text message, can thus be visualized through the web page stored on the server 140.

The information to allow the message sent by the device 10 to be visualized appears advantageously on the display of the device 30, in the form of hypertext link to the web page, which can be visualized on the device 30.

The recipient, being the user of the third mobile device 30, must first enter the encryption sequence, i.e. the PIN, on the device 30 to correctly visualize this hypertext link.

As stated above, this encryption sequence is advantageously received from the first device 10 through the channel 131.

The web page, activated through said hypertext link, places the third mobile device 30 in connection with the second device 20 through the communication visualization channel 323. Visualization of the message by means of the hypertext link also activates the read receipt communication channel 321 between the second device 20 and the first device 10.

The channel 321 allows communication of fourth information by the second device 20 to the first device 10, which comprises the read receipt of the communication sent to the third mobile device 30, with indication of the date and time of reading.

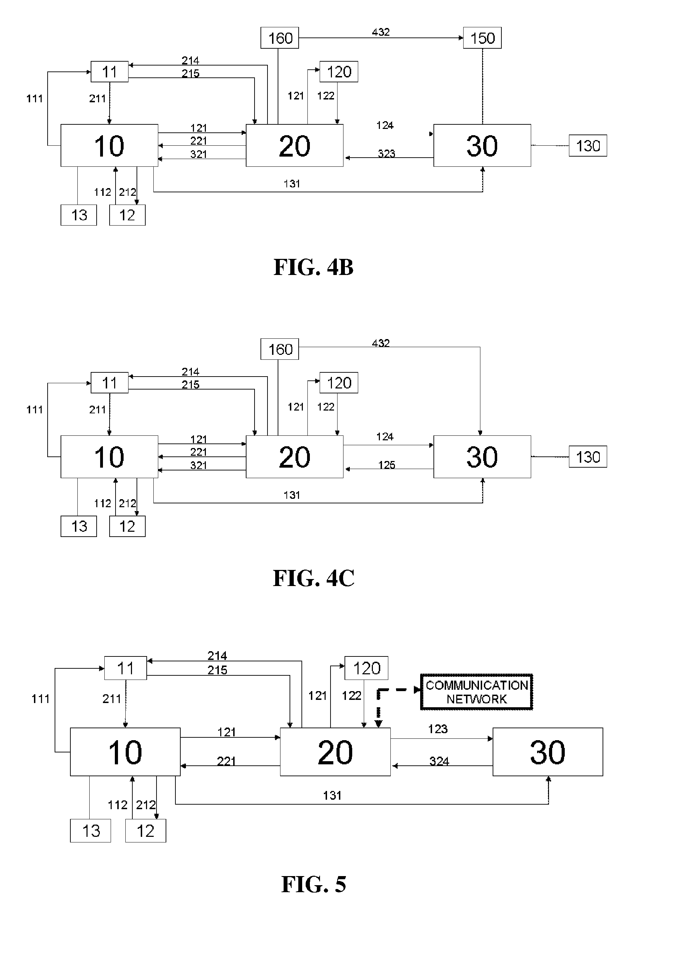

In a third embodiment, with reference to Figs. 4A, 4B and 4C, the third mobile device 30 is constituted by a personal mobile communication device, specifically a mobile (cellular) telephone, enabled to execute a visualization application 130, stored therein.

In this embodiment, the device 30 thus comprises computer means for notifying that the second information has been received.

With this configuration, it is also possible to guarantee that the second device 20 is capable of sending a read receipt to the first device 10.

Said read receipt will be stored by the second device 20 together with the other information concerning that message.

In this embodiment of the invention, the communication network is substantially the same as the one described for the second embodiment, with the difference that the third mobile device 30 also comprises the visualization application 130 and the web server 140 is substituted by an application server 160 for interaction with the application 130.

The application 130 has different operating modes in relation to the operating system of the mobile computer device in which it resides.

In the case of use of a Java platform (J2ME), the application 130, upon first being launched, saves in the memory of the third mobile device 30 the telephone numbers with which the second device 20 sends notifications (for example single ring or aborted call) of a new incoming message.

This operation allows these numbers to be associated with a name that distinguishes the second device 20.

Upon receiving notification the recipient must launch the application 130 manually to connect to the second device 20.

For mobile terminals based on the Symbian operating system, the application 130 is executed cyclically each time the third mobile device is launched 30.

In this case, it intercepts the incoming notification (single ring or aborted call), interrupts it and proceeds with connection to the second device 20. On this platform it is also possible to establish a permanent connection to the application server 160.

For mobile terminals based on the Android operating system, the application 130 can function in the same manner described for the Symbian platform.

For terminals based on the iPhone operating system, the application 130 cannot run permanently in the background and uses a hybrid system to receive notification and for connection to the server 160. In this latter case, a external PUSH notification system 150 is present, interposed, for notification of receipt of the communication, between the server 160 and the application 130.

The third embodiment of the invention shall now be described in greater detail.

The second device 20 first performs a check to verify whether the third mobile device 30 is connected permanently to the server 160. This allows distinction between two possible modes of forwarding the second information.

If the third mobile device 30 is permanently connected to the second device 20, the second information is sent instantly through the channel 124 produced using of a proprietary protocol through a TCP socket (Fig. 4A).

If the third mobile device 30 is not permanently connected to the second device 20, the communication is sent, if possible, through a hybrid system that uses the proprietary system of the server 160 together with an external PUSH notification system 150, for example a PUSH system for iPhone or Blackberry or Android (Fig. 4B).

If, for example, the third mobile device 30 is an iPhone device, to forward the second information the second device 20 must associate the identification code of the device 30 (called iPhone token), previously extracted, with the second information to be forwarded. The token and the aforesaid second information must therefore be stored inside the server 160.

The second device 20 then sends to the PUSH notification system 150 a notification that activates the application 130 of the third mobile device 30 through the channel 432. The application 130 then connects to the server 160 through the communication request channel 124, thus allowing the third mobile device 30 to receive the second information to be visualized, i.e. the first data previously transmitted by the first device 10.

The application 130 allows retrieval of the second information to be visualized through the channel 124.

Finally, if the third mobile device 30 is not permanently connected to the second device 20 and it is not possible to use a hybrid transmission system, the communication network takes the configuration of the third embodiment shown in Fig. 4C with implementation of a further information request communication channel 125.

This channel is produced through the use of a proprietary protocol with TCP socket (Fig. 4C). The second device 20 sends a notification that activates the application 130, through the channel 432 that connects the server 160 to the third mobile device 30.

This notification can, for example, be a single ring or aborted call that activates the application 130 in the third mobile device 30.

When the application 130 connects, it requests that the second information, in particular at least the aforesaid first data, is sent through the channel 125. This information is thus sent by the device 20 through the channel 124.

If the application 130 does not reside in the memory, it cannot be activated by simple receipt of notification, but must be launched manually by the user, when this latter becomes aware of the notification (for example, single ring or aborted call by a number previously stored and identifying the second device 20).

To visualize the second information correctly, the application 130 can request that the encryption sequence, or PIN, is entered to verify the identity of the user.

From the above it is evident how the application 130 acts to initiate forwarding to the third mobile device 30 of the first data transmitted by the first device 10 to the second device 20.

In a further embodiment (Fig. 5), a communication channel 324 is arranged between said third mobile device 30 and said second device 20. In this way, the user of the third mobile device 30 can reply when it receives the certified information received, for example to confirm a proposal or a contract received.

The user of the third mobile device 30, after receiving the certified message, can thus send fifth information to the second device 20, thorough the communication channel 324, as a reply to the second information received. In particular, said fifth information may be sent using the information received from the sender or enclosed in it, such as for the example the cellular number of the third mobile device 30.

The second device 20 stores the fifth information, received by the device 30, on permanent archives 120 through the storing channel 121.

Advantageously, the fifth information is stored by the second device 20 in relation to the first information, received from the first device 10, or the second information, received from the third mobile device 30.

This allows the stored information to be displayed, if necessary, through the communication retrieving channel 122, to allow verification, at any time, of the content of the fifth information received from the device 30 and, consequently, of the first information received from the device 10. This guarantees non-repudiability of the information transmitted both for the sender and for the recipient.

After having stored the fifth information, the second device 20 forwards said fifth information to the first device 10, through the delivery receipt channel 221.

Advantageously, the second device 20 uses the data, transmitted by the third mobile device 30, to query the communication network, on which the third mobile device 30 is registered, and/or to extract first specifications of said third mobile device 30.

These specifications comprise at least an identification code of the third mobile device 30 adapted to allow identification of the sender and/or the used communication protocols.

In other words, the forward of the fifth information, as well as the forward of the second information, is advantageously preceded by the extraction of the characteristics of the third mobile device 30. Said characteristics are obtained by the second device 20, in relation to the telephone number associated with the third mobile device 30, so as to identify the forwarding protocol to use in the transmission.

These characteristics are identified by the second device 20 through data provided by the GSM network on which the telephone number, related to the third mobile device 30, is registered.

The second device 20 detects the identification code of the third mobile device 30 (like the IMEI), thereby allowing identification of the aforesaid specifications.

The transmission method and the communication network according to the present invention allows the set aim and the objects to be fully achieved.

In particular, the digital signature of the sender and the possible simultaneous use of an encryption sequence guarantees the integrity of the communication in relation to the recipient. Storing on a permanent and unalterable medium allows the data and information transmitted by the sender to be displayed in the event of dispute between the parties, at any time and consequently non-repudiability both by the sender and by the recipient.

With delivery receipt it is always possible for the sender to receive information on the effective status of the transmission of data and information to the recipient.

These pieces of information will be stored as well, so that it is possible to recover them in a future time together with the other information related to that message.

The sender will also be able to learn the time and date that delivery took place or if communication with the recipient did not take place due to impossibility to deliver related to problems of the recipient (for example, recipient's telephone number out of service) or to problems related to the physical and logical structure for communication.

Moreover, with the read receipt, it is also possible for the sender to receive a communication indicating the date and time at which this communication was actually read by the recipient. The method and the communication network according to the invention allow data and information to be transmitted immediately, without the need for a physical and/or logical presence of the recipient, as instead occurs in the case of sending registered letters.

The method and the communication network according to the invention allow high standards of confidentiality, due to transmission of the communication using secure protocols and/or, optionally, the possibility to create a direct and confidential transmission channel between sender and recipient, using an encryption sequence or PIN.

The method and the communication network according to the invention make it possible to reduce the costs related to the certified transmission of data and information. The sender eliminates costs related to printing, inserting and mailing of the paper medium of the communication which would be necessary for conventional forms of communication.

## Claims

1. A method for performing certified asynchronous electronic transmission of data and information via messaging, using mobile communication protocols, between a first sending computer device (10), at least a second intermediary computer device (20), in communication with said first computer device, and at least a third receiving mobile computer device (30), in communication with said second computer device, **characterized in that** it comprises the following steps:
- a first step, in which said first computer device (10) sends first information to said second computer device (20), said first information comprising first data to be forwarded to said third mobile computer device (30), second identification data of said third mobile computer device and a digital signature, third encryption data of at least said first data, said third encryption data comprising at least an encryption sequence and/or data generated through said encryption sequence;
- a second step, in which said second computer device (20) receives said first information, performs verification of said first information, based on the digital signature sent by said first computer device, stores said first information on at least a permanent medium (120), and forwards to said third mobile computer device (30) second information comprising at least said first data and/or information adapted to allow access to said first data, after having stored said first information;
- a third step, in which said third mobile computer device (30) receives said second information and makes said second information accessible to the user, after having entered said encryption sequence and/or data generated through said encryption sequence, at least said encryption sequence being forwarded by said first computer device (10) directly to said third mobile computer device (30);
- a fourth step, in which said second computer device (20) sends to said first computer device (10) third information indicating the delivery status of said second information.

2. The method according to claim 1, **characterized in that** said third data comprise at least an authentication code generated through a symmetric algorithm that uses as key said encryption sequence and/or data generated through said encryption sequence.

3. The method according to one or more of the preceding claims, **characterized in that** said first computer device (10) performs an encryption of said first information using at least a symmetric algorithm that uses as key said encryption sequence and/or data generated through said encryption sequence.

4. The method according to one or more of the preceding claims, **characterized in that** said encryption sequence and/or the data generated through said encryption sequence are generated by said first computer device.

5. The method according to one or more of the preceding claims, **characterized in that** said second computer device (20) performs verification of said first information using said digital signature.

6. The method according to one or more of the preceding claims, **characterized in that** said second computer device (20) uses said second identification data to query the mobile communication network, on which said third mobile computer device (30) is registered, and/or to extract specifications of said third mobile computer device.

7. The method according to claim 6, **characterized in that** said specifications comprise at least an identification code of said third mobile computer device (30) adapted to allow identification of the type of said third mobile computer device and/or identifiability of the mobile communication protocols supported by said third mobile computer device.

8. The method according to one or more of the preceding claims, **characterized in that** said second computer device (20) sends a read receipt to said first computer device (10), when said certified asynchronous electronic transmission is performed using HTTPS protocols and/or protocols provided with a symmetric encryption algorithm.

9. The method according to one or more of the preceding claims, **characterized in that** said third mobile computer device (30) comprises computer means adapted to notify the receipt of said second information.

10. The method according to claim 9, **characterized in that** said computer means comprise a visualization application (130) stored in said third mobile computer device.

11. The method according to one or more of the preceding claims, **characterized in that** said third mobile computer device (30) sends fifth information to said second computer device (20) to reply to the receiving of said second information.

12. The method according to claim 11, **characterized in that** said second computer device (20) receives said fifth information, stores said fifth information on at least a permanent medium (120), and forwards to said first computer device (10) at least said fifth information.

13. A communication network for certified asynchronous transmission of data and information via messaging, using mobile communication protocols, comprising at least a first sending computer device (10), at least a second intermediary computer device (20), in communication with said first computer device, and at least a third receiving mobile computer device (30), in communication with said second computer device, said second computer device, **characterized in that**:
- said first computer device (10) sends first information to said second computer device (20), said first information comprising first data to forward to said third mobile computer device (30), second identification data of said third mobile computer device and a digital signature, third encryption data of at least said first data, said third encryption data comprising at least an encryption sequence and/or data generated through said encryption sequence;
- said second computer device (20) receives said first information, performs verification of said first information, based on the digital signature sent by said first computer device, stores said first information on at least a permanent medium, and forwards to said third mobile computer device (30) second information comprising at least said first data and/or information adapted to allow access to said first data, after having stored said first information;
- said third mobile computer device (30) receives said second information and makes said second information accessible to the user, after having entered said encryption sequence and/or data generated through said encryption sequence, at least said encryption sequence being forwarded by said first computer device (10) directly to said third mobile computer device (30);
- said second computer device (20) sends to said first computer device (10) third information indicating the delivery status of said second information.
